**Europäisches Patentamt**

**European Patent Office**

**Office européen des brevets**

(19)

(11) **EP 0 711 977 A2**

(12) **EUROPÄISCHE PATENTANMELDUNG**

(43) Veröffentlichungstag:
15.05.1996 Patentblatt 1996/20

(51) Int. Cl.⁶: **G01D 5/241**

(21) Anmeldenummer: 95100851.5

(22) Anmeldetag: 23.01.1995

(84) Benannte Vertragsstaaten:
**AT BE CH DE DK ES FR GB GR IT LI NL PT SE**

(30) Priorität: **10.11.1994 DE 4440068**
**30.12.1994 DE 4447294**

(71) Anmelder: **HORST SIEDLE KG**
**D-78120 Furtwangen (DE)**

(72) Erfinder: **Gleixner, Franz**
**D-85244 Röhrmoos (DE)**

(74) Vertreter: **Otte, Peter, Dipl.-Ing.**
**Mollenbachstrasse 37**
**D-71229 Leonberg (DE)**

(54) **Verfahren und Vorrichtung zur Bestimmung einer jeweiligen örtlichen Position eines Körpers**

(57) Zur Bestimmung einer jeweiligen örtlichen Position, des Verschiebewegs oder des Winkels eines bewegbaren Körpers, wird ein mindestens in einer Richtung räumlich ausgedehntes Spannungs(ver)teiler-Element mit einer Wechselspannung gespeist, wobei eine Potentialmeßsonde entsprechend dem zu erfassenden Weg, des Winkels oder der Position geführt und in einem solchen berührungsfreien Abstand zum Spannungs(ver)teiler-Element gehalten wird, daß die Potentialmeßsonde je nach der von ihr eingenommennen Position unterschiedliche Wechselspannungsamplituden des Wechselspannungsamplitudenverteilungsmusters durch kapazitive Einkopplung erfaßt, dabei ist die Potentialmeßsonde mit einer Potentialkoppelsonde verbunden, die kapazitiv auf eine Koppelelektrode arbeitet, von welcher der von der Potentialmeßsonde erfaßte Wechselspannungsamplitudenmeßwert zur Auswertung übertragen wird.

Fig. 1

**Beschreibung**

Stand der Technik

Die Erfindung betrifft ein Verfahren nach dem Oberbegriff des Anspruchs 1 und eine Vorrichtung nach dem Oberbegriff des Anspruchs 2 und bezieht sich allgemein auf Möglichkeiten zur Erfassung der Position, des Wegs oder Winkels von bewegbaren Körpern.

In den meisten Fällen werden zu diesem Zweck Spannungsteilerschaltungen nach dem bekannten Potentiometerprinzip eingesetzt, die als Weggeber, Stellwiderstände oder Potentiometer ausgebildet sind und bei denen auf einem Spannungsteiler, der auch als aufgespritzter oder aufgedampfter Niederschlag auf einem Substrat ausgebildet sein kann, ein Schleifer in Kontaktberührung gleitet, der hierdurch in die Lage versetzt wird, je nach seiner Position unterschiedliche Gleichspannungspotentiale der Widerstandsbahn abzugreifen und üblicherweise über einen direkt mit ihm verbundenen Kollektorschleifer auf eine Kollektorbahn zu übertragen, von welcher das abgegriffene Potential dann zur Auswertung verfügbar ist. Solche Potentiometer, die in bestimmten Ausführungsformen mit außerordentlich hoher Präzision als Weg- oder Meßwertgeber eingesetzt werden können, können unter bestimmten Bedingungen aufgrund der ständigen Kontaktgabe, die letztlich auch zu Abnutzungen bei schnellen Schleiferbewegungen führt, Probleme aufweisen, die eine berührungslose Erfassung der Fühler an den Meßwerten erstrebenswert machen.

So ist es auch bekannt, als Weggeber auch Induktivitäten in Form beispielsweise von Differentialspulen, Differentialtransformatoren oder Induktivitäten mit Kurzschlußwicklung in Form eines Rohres einzusetzen, was aber in vielen Fällen eine gewisse Meßungenauigkeit oder unter Umständen auch Nichtlinearitäten nach sich zieht.

Wird andererseits der Spannungsabgriff berührungslos mit einem kapazitiven Positionssensor oder Wegaufnehmer vorgenommen, wie dies beispielsweise aus der DE 28 26 398 C2 bekannt ist, dann ergeben sich durch Streukapazitäten und Ableitwiderstände, die insgesamt als Störgrößen bezeichnet werden können, erhebliche Verfälschungen des Meßwerts, die zumeist nicht hinnehmbar sind. So besteht der kapazitive Wegaufnehmer der DE 28 26 398 C2 aus einem Paar schräg unterteilter, gegeneinander isolierter Kondensatorplatten, die an einer Wechselspannungsquelle anliegen, mit einer als Abgriff dienenden, zwischen den Kondensatorplatten um den abzugreifenden Weg verstellbaren Zwischenplatte. Die Zwischenplatte ist über Verbindungskabel mit dem Eingang einer Auswerteschaltung verbunden, wobei aufgrund der Bewegungen des Abgriffs auf das Verbindungskabel und dessen Anschlußpunkte ständig sich verändernde Kräfte ausgeübt werden, die nicht nur eine beschleunigte Alterung des Wegaufnehmers bewirken, sondern durch die Lage- und Wegänderungen des Kabels gleichzeitig zu Kapazitätsänderungen und sich ändernde Streukapazitäten bilden, die eine nicht definierbare und vor allen Dingen auch nicht zu kompensierende Störgröße bedeuten.

Bei einem weiteren Wegmeßgeber (DE 34 41 217 A1) liegt eine dicht gedrängte, einen mäander- oder zickzackförmigen Verlauf aufweisende Widerstandsleiterbahn auf einer Substratfläche auf, wobei sich in einem Abstand Zu dieser Widerstandsleiterbahn einverschiebliches Abgriffselement befindet, welches flächenartig als Kreisring ausgebildet ist und so das jeweilige Potential kapazitiv auskoppelt und über eine Verbindungsleitung einem aus einem Voltmeter bestehenden Meßkreis zuführt. Da die Leiterbahn an einer Versorgungsgleichspannung liegt, läßt sich eine kapazitive Meßwerterfassung nur im Verlauf einer Verschiebung erfassen, so daß eine stationäre Position des Abgriffs infolge eines fehlenden Meßwerts nicht auswertbar ist. Darüber hinaus ergeben sich in gleicher Weise aus Streukapazitäten und Ableitwiderständen bestehende Störgrößen, die sich nicht beseitigen lassen.

Schließlich ist es bekannt (US 3 636 449), die Position eines beweglichen Galvanometerzeigers dadurch zu bestimmen, daß eine auf einer Seite geerdete Wechselspannung über einen Zwischenkondensator am Zeiger anliegt, der sein Potential kapazitiv auf eine Widerstandsbahn einkoppelt, so daß sich an einem Ende der Widerstandsbahn ein durch die jeweilige Abgriffsposition bestimmtes entsprechend gedämpftes Wechselstromsignal erfassen und gleichrichten läßt. Hieraus läßt sich die Abgriffsposition bestimmen, wobei der Abgriff der Zeiger eines Galvanometers ist, der im vorgegebenen Abstand über die Widerstandsbahn gleitet.

Der Erfindung liegt die Aufgabe zugrunde, einen berührungslosen Positionssensor zu schaffen, der bei Verwendung unkritischer und preisgünstiger Bauteile nur eine sehr geringe Störgrößenempfindlichkeit aufweist bzw. so ausgelegt ist, daß durch entsprechende Auswerteschaltungen der Störgrößeneinfluß, beispielsweise der Einfluß von Streukapazitäten und Ableitwiderständen, praktisch zu Null gemacht werden kann.

Vorteile der Erfindung

Die Erfindung löst diese Aufgabe mit den Merkmalen des Anspruchs 1 bzw. des Anspruchs 2 und hat den Vorteil, daß auch extrem häufige Betätigungen über lange Zeiträume, sonstige mechanische Einflüsse wie Vibrationen u.dgl. die einwandfreie Genauigkeit und Präzision nicht beeinflussen können, wobei es andererseits gelingt, die bei dem Grundprinzip einer kapazitiven Abtastung gegebenenfalls auftretenden Störgrößen, die auf Streukapazitäten oder sonstige Ableitwiderstände zurückzuführen sind, problemlos auszuschalten bzw. durch die Grundkonzeption des der Erfindung zugrunde liegenden Positionssensors von Anfang an nicht in Erscheinung treten zu lassen.

Von besonderem Vorteil ist ferner, daß aufgrund der flächigen Erfassung der jeweiligen Relativposition einer Potentialmeßsonde mit Bezug auf ein Spannungsverteilungselement - hierauf wird weiter unten gleich noch eingegangen -, ein Mittelwert der Spannungsamplitudenverteilung am jeweiligen Meßpunkt gewonnen wird, welcher sich aus einer Summe von Einzelpotentialen zusammensetzt. Ein solcher, durch die jeweilige Potentialsondenposition bestimmter Mittelwert reagiert auf kleinste Verschiebungen und hängt linear von der Relativposition der Potentialsonde ab, so daß einerseits die Vorteile einer kapazitiven Abtastung, nämlich insbesondere Berührungsfreiheit und Freiheit von mechanischen Abnutzungserscheinungen, beibehalten werden, andererseits den bei einer kapazitiven Abtastung auftretenden, zum Teil erhebliche Verfälschung der Meßausgangsspannung bewirkenden Streugrößen sicher begegnet wird, und zwar deshalb, weil das Grundprinzip der Messung nicht auf einer Kapazitätsänderung besteht - die Kapazität zwischen der Potentialsonde einerseits und dem Spannungsteilerelement, von welchem die Potentialsonde die Meßspannung abgreift, bleibt bei jeder Potentialsondenposition im wesentlichen gleich.

Dabei ist unter einem an dieser Stelle und auch im folgenden wiederholt verwendeten, als Spannungsverteilungselement bezeichneten Bauteil ein stationäres, in Meßrichtung sich erstreckendes Gegenelement zu verstehen, welches so ausgebildet ist, daß es in Meßrichtung, also in Verschiebungsrichtung der Potentialmeßsonde gesehen dieser an jeder unterschiedlichen Position ein unterschiedliches Amplitudenverteilungsmuster zur Abtastung anbietet, wobei sich bei bestimmten Ausführungsformen eines Spannungsverteilerelements das jeweilige Meßpotential auch erst durch eine funktionale Wirkverbindung mit der Flächenstruktur der Potentialmeßsonde selbst ergibt, dann nämlich, wenn es sich bei dem Spannungsverteilerelement konkret um zwei aneinanderliegende, jedoch gegeneinander isolierte entgegengesetzt verjüngt zulaufende Elektrodenplatten handelt, die mit jeweils einem Pol der Versorgungswechselspannung verbunden sind. Auch eine solche Ausführungsform eines Spannungsverteilerelements fällt unter den Anwendungsbereich vorliegender Erfindung, obwohl diese als konkrete Bauform eines Spannungsverteilerelements einen echten Spannungsteiler in Form beispielsweise einer Widerstandsbahn bevorzugt, so, wie diese bei Potentiometern an sich üblich ist.

Ferner ermöglicht das erfindungsgemäße Grundprinzip die Realisierung von Auswerteschaltungen auf elektronischer Grundlage, durch welche sich Störgrößeneinflüsse praktisch völlig eliminieren, jedenfalls minimal halten lassen, weil es zum Grundprinzip der Erfindung gehört, daß die Position eines bewegbaren Körpers mit Hilfe einer ersten, auf kapazitiver Grundlage arbeitenden Potentialmeßsonde erfaßt und von dieser auf eine Potentialkoppelsonde übertragen wird, die mit der Potentialmeßsonde mindestens elektrisch verbunden ist und im bevorzugten Ausführungsbeispiel mit dieser ein einheitliches Bauteil bildet. Die Potentialkoppelsonde ihrerseits steht dann mit einer stationären Koppelelektrode ebenfalls wieder in kapazitiver Wirkverbindung, so daß sich im Ersatzschaltbild der Meßaufnehmer als eine erste Meßkapazität darstellt, die vom Spannungs(ver)teiler-Element die sich je nach Position ändernde Wechselspannungsamplitude abgreift - tatsächlich wird eine Art Meßkondensator von der Potentialmeßsonde zusammen mit dem Spannungsteilerelement gebildet -, woraufhin das abgegriffene Potential über einen weiteren "Koppelkondensator" einem Verstärker zugeführt wird, wobei dieser Koppelkondensator physikalisch gebildet ist von einer mit der Potentialmeßsonde körperlich verbundenen Potentialkoppelsonde und der der Koppelsonde zugeordneten Koppelelektrode, die eine räumlich ausgedehnte Form aufweist mit Haupterstreckungsrichtung in Meßrichtung, und an der das erfaßte Meßpotential zur Auswertung dann abgegriffen wird. Es ist daher möglich, auf irgendwelche Verbindungskabel oder sonstige mechanische, stromführende Bauteile, die einer Bewegung unterworfen werden - mit Ausnahme der Baueinheit aus Potentialmeßsonde und Potentialkoppelsonde, vollständig zu verzichten, so daß auch keine variablen Streukapazitäten auftreten oder durch die Ortsverlagerung irgendwelche Verbindungskabel einer mechanischen Belastung unterworfen sind, noch hierdurch entsprechende Kapazitätsänderungen den gewonnenen Meßwert beeinflussen können.

Eine bevorzugte Bauform enthält auf einem geeigneten Substrat zueinander isoliert das Spannungs(ver)teilerElement und räumlich parallel zu diesem, jedoch im Abstand verlaufend die Koppelelektrode, wobei das gemeinsame Bauteil aus Potentialmeßsonde und Potentialkoppelsonde in geeigneter Weise mechanisch sicher über Spannungs(ver)teilerelement und Koppelelektrode geführt ist, so daß insgesamt keine Kapazitätsänderungen auftreten können.

Es ist möglich, die Bauform im Sinne eines Drehpotentiometers rotationssymmetrisch oder auch als Längenweggeber nach Art eines linearen Längspotentiometers auszubilden.

Insofern verfügt die einen Meßkondensator beispiels- und vorzugsweise konstanter Kapazität bildende erste Meßkondensatoreinrichtung über ein stationäres Spannungsteilerelement und die eine bewegbare Platte (Potentialmeßsonde) des gemeinsamen Bauteils aus Potentialmeßsonde und Potentialkoppelsonde, wobei auch die Koppelkondensatoreinrichtung aus einem stationären Teil, nämlich der Koppelelektrode, und einem bewegbaren Körper besteht, nämlich der anderen Teilplatte des gemeinsamen Bauteils, welche die Potentialkoppelsonde bildet. Mit konstanter Kapazität ist hier gemeint, daß die Kapazität jedenfalls während eines Meßzyklus, der beispielsweise aus Meß- und Referenzphase besteht, konstant ist. Ansonsten ist eine Kapazitätsänderung, die natürlich nicht mit einer Meßwertänderung korreliert ist, möglich. Im Ersatzschaltbild erscheinen dabei Meßkondensatoreinrichtung und Koppelkondensatoreinrichtung hintereinandergeschaltet, wobei der von der beweglichen Potentialmeßsonde abgetastete Wechselspannungsamplitudenmeßwert an der stationären Koppelelektrode abgenommen wird.

Es ist auch möglich, daß das gemeinsame Bauteil, welches den gemeinsamen Aufbau aus Potentialmeßsonde und Potentialkoppelsonde repräsentiert, diese beiden Sonden lediglich elektrisch miteinander verbindet, die jedoch stets so zueinander angeordnet sind, daß sie eine synchrone Verschiebebewegung zur Meßwerterfassung erfahren, so daß Deformationen oder Veränderungen vorhandener elektrischer Verbindungswege ausgeschlossen sind und stets lineare Beziehungen vorliegen.

Es ist möglich, die Meßkondensatoreinrichtung auf der einen Seite und die Koppelkondensatoreinrichtung gegenüberliegend auf der anderen Seite eines Substrats oder eines Trägerkörpers anzuordnen - es ist auch möglich, beide in Form von konzentrischen Kreisteilen oder Kreisen auf einer gemeinsamen, dann kreisförmigen Trägerfläche so aufzubauen, daß eine zentrale Achse das gemeinsame Bauteil aus Potentialmeßsonde und Potentialkoppelsonde im konstanten starren Abstand zum Spannungs(ver)teilerelement und zur Koppelelektrode lagert und verschiebt.

Von Vorteil ist ferner, daß das Spannungs(ver)teilerelement eine Vielzahl unterschiedlicher Ausführungsformen aufweisen kann, und zwar beginnend mit einer für sich gesehen bekannten Widerstandsbahn, so wie diese bei Potentiometern beispielsweise durch einen WiderstandsKunststoffbelag (aufgespritzt, aufgedampft oder sonstwie aufgetragen) gebildet ist, über die die Potentialmeßsonde als plattenförmiges Flächenelement berührungsfrei im konstanten Abstand geführt ist, bis zu sich in schräger Versetzung zueinander erstreckenden Elektrodenplatten, die unterschiedliches Wechselspannungspotential führen und so angeordnet und geometrisch ausgedehnt in Meßrichtung verlaufen, daß je nach Verschiebeweg die Platte der Potentialmeßsonde jeweils unterschiedliche Flächenbereiche eines solchermaßen beschaffenen Spannungs(ver)teilerelementes überdeckt und im Sinne einer Mittelwertbildung auch hier ein bestimmtes, dem Verschiebeweg folgend mit feinster Auflösung sich änderndes Spannungsgesamtpotential erfaßt wird.

Dazwischen können Spannungs(ver)teilereinrichtungen liegen, die in Verschieberichtung gesehen aus aneinandergrenzenden einzelnen Elektrodenplatten bestehen, die jeweils unterschiedliches Spannungspotential aufweisen und zu diesem Zweck mit einer Widerstandskettenschaltung verbunden sind, wobei die Fläche der Potentialmeßsonde je nach ihrer Position über den Gegenelektrodenplatten eines solchen Spannungs(ver)teilerelementes unterschiedlich große Bereiche überdeckt und integrierend ein entsprechend fein aufgelöstes Amplitudensignal des Wechselspannungspotentials erfaßt und auf die Koppelkondensatoreinrichtung, nämlich die mit ihr verbundene Potentialmeßsonde überträgt, von welcher das abgegriffene Potential zur Koppelelektrode gelangt.

So umfaßt bei der ersten Ausführungsform das Spannungs(ver)teilerelement eine Widerstandsbahn oder Potentiometerbahn, die an eine Wechselspannung angeschlossen ist, wodurch der Potentialmeßsonde ein sich stetig ändernder Spannungsamplitudenverlauf zur Abtastung angeboten wird.

Ein "Spannungsteiler" mit stufenförmigem Spannungsverlauf kann dadurch gebildet sein, daß in Meßrichtung hintereinander angeordnete, im wesentlichen rechteckige Kondensatorplatten vorgesehen sind, die gegeneinander isoliert sind und wobei jede der Kondensatorplatten, die in ihrer Gesamtheit das stationäre Spannungsteilerelement bilden, jeweils mit dem Verbindungsanschluß einer Widerstandsreihenkettenschaltung verbunden sind. Trotz stufenförmigen Spannungsverlaufs über einer solchen, durch einzelne Elektroden gebildeten Spannungs(ver)teilereinrichtung ist der Spannungsverlauf des von der Potentialmeßsonde gebildeten Abgriffs linear, wobei es sich versteht, daß die Geometrie der Potentialmeßsonde, d.h. deren Plattenform, der Geometrie der jeweiligen Kondensatorplatten angepaßt ist. Da der Abstand zwischen der jeweiligen Plattenform der Potentialmeßsonde und den Elektroden- oder "Kondensator"-Platten des Spannungsteilers bevorzugt konstant gehalten ist, wenn sich die Potentialmeßsonde in Meßrichtung bewegt, tritt auch hier keine Kapazitätsänderung als Störgröße auf.

Es ist auch möglich, die Spannungs(ver)teilereinrichtung in Form von zwei oder auch vorzugsweise drei, sich quer zur Meßrichtung erstreckenden und sich in Meßrichtung verjüngenden bzw. verbreiternden Kondensatorplatten oder besser Elektrodenplatten auszubilden, die gegeneinander isoliert sind, wobei benachbarte Elektrodenplatten in derselben Meßrichtung jeweils eine zueinander entgegengesetzte Verjüngungs- bzw. Verbreiterungsstruktur aufweisen. Da jede der Elektrodenplatten an einem unterschiedlichen Spannungsanschluß liegt, wobei eine mittlere Elektrodenplatte beispielsweise mit der Wechselspannung und die beiden anderen, angrenzenden Elektrodenplatten mit Masse verbunden sein können, an die natürlich gleichzeitig der andere Wechselspannungsanschluß angeschlossen ist, wird die Kondensatorplatte der Potentialmeßsonde je nach Position und Verschieberichtung einen immer größeren oder kleineren Teil der die volle Wechselspannungsamplitude führenden einen Platte und entsprechend einen immer kleineren bzw. größeren Teil der mit dem Masseanschluß verbundenen anderen oder weiteren anderen Platten überdecken, so daß sich an der Potentialmeßsonde ein sich in Verschieberichtung änderndes Wechselspannungsamplitudenmuster ergibt, beientsprechend feinster Auflösung in Verschieberichtung, welches unverfälscht über die Potentialkoppelsonde auf die stationäre Koppelelektrode übertragen wird.

Es ist auch möglich, der Plattenform der Potentialmeßsonde eine spezielle, den Einfluß von Störgrößen bekämpfende Form zu verleihen; so kann bei einem weiteren Ausführungsbeispiel die Spannungsteilereinrichtung wieder aus einer in Meßrichtung hintereinander angeordneten Abfolge von beispielsweise im wesentlichen rechteckigen Elektrodenplatten bestehen, die jeweils unterschiedliches Potential aufweisen oder auch durch die weiter vorn schon erläuterten sich jeweils verjüngenden bzw. verbreiternden Elektrodenplatten, während die Potentialmeßsonde an gegenüberliegenden Seiten in Meßrichtung gesehen entgegengesetzte, sich jeweils verjüngende bzw. verbreiternde Ansätze aufweist, die spitzwinklig in Meßrichtung angrenzende Elektrodenplatten der stationären Spannungsteilereinrichtung noch zusätzlich mit überdecken. Bei einer solchen kapazitiven Sensorstruktur ergibt sich eine hohe Empfindlichkeit unter geringem Einfluß von Randeffekten an den Übergängen der rechteckigen Elektrodenplatten.

Grundsätzlich ist der von der Potentialmeßsonde erfaßte Spannungsverlauf im wesentlichen linear, wenn deren körperliche Form rechteckig-plattenförmig ausgebildet ist und in Meßrichtung eine Ausdehnung aufweist, die im wesentlichen der Ausdehnung der rechteckförmigen Elektrodenplatten der Spannungsteilereinrichtung entspricht. Durch beidseitige dreieckige Ansätze läßt sich die Linearität des Spannungsverlaufs weiter erhöhen, wobei eine solche, stets einen Mittelwert der abgegriffenen Spannung bildende Potentialmeßsonde sowohl einsetzbar ist bei in Meßrichtung aneinandergrenzenden Elektrodenplatten als auch bei solchen Spannungsteilereinrichtungen, die aus sich in Meßrichtung verjüngenden bzw. verbreiternden Elektrodenplatten bestehen, wobei auch Kombinationen im Aufbau einer solchen Spannungsteilereinrichtung möglich sind, indem auf der einen Seite eines Dielektrikums die aneinandergrenzenden Elektrodenplatten und auf der anderen Seite die sich verjüngenden bzw. verbreiternden Elektrodenplatten angeordnet sind.

Durch die in den Unteransprüchen aufgeführten Maßnahmen sind vorteilhafte Weiterbildungen und Verbesserungen der Erfindung möglich.

Zeichnung

Ausführungsbeispiele der Erfindung sind in der Zeichnung dargestellt und werden in der nachfolgenden Beschreibung näher erläutert. Es zeigen:

Fig. 1      eine schematische Darstellung einer ersten Ausführungsform eines geradlinigen Weggebers auf kapazitiver Grundlage unter Zugrundelegung einer Spannungsteilereinrichtung mit stetigem Spannungsverlauf;

Fig. 2      eine weitere Ausführungsform eines geradlinigen Weggebers auf kapazitiver Grundlage, auch hier jeweils bestehend aus dem Meßsensor- und dem Koppelbereich, wobei der Spannungsteiler aus einzelnen aneinandergrenzenden, jedoch zueinander isolierten Elektrodenplatten gebildet ist, die jeweils an einem, durch eine Kettenwiderstandsreihenschaltung gebildeten unterschiedlichen Wechselspannungspotential liegen;

Fig. 3      zeigt, ebenfalls schematisiert, eine dritte Ausführungsform eines linearen Weggebers auf kapazitiver Grundlage mit einer solchen Ausbildung der Spannungs(ver)teilerschaltung, daß diese in Verbindung mit der zugeordneten Gegenplatte der Potentialmeßsonde durch die kapazitive Abgriffwirkung über die Meßrichtung gesehen unterschiedliche Wechselspannungsamplituden abgreift;

Fig. 4      zeigt schematisiert eine Ausführungsform eines Positionssensors auf kapazitiver Grundlage mit einer Kombination der Spannungs(ver)teilereinrichtung aus Aufbaustrukturen der Figuren 2 und 3, während die

Fig. 5      eine letzte Ausführungsform eines Positionssensors auf kapazitiver Grundlage darstellt, bei dem zwei Dreh-Meßsysteme auf einem gemeinsamen Substrat angeordnet sind; die

Fig. 6 und Fig. 7      zeigen schematisiert zum besseren Verständnis der Erfindung Darstellungen eines Spannungs(ver)teilerelements, wobei die Fig. 7 den kapazitiven Funktionszusammenhang zwischen Potentialmeßsonde und dem Spannungs(ver)teilerelement, hier in Form einer Widerstandsbahn angibt;

Fig. 8      zeigt schließlich eine bevorzugte Ausgestaltung in schematisierter Darstellung, bei welcher ein beidseitiger Abgriff vorgesehen ist.

Beschreibung der Ausführungsbeispiele

Der Grundgedanke besteht darin, bei einem Positions-Sensor auf kapazitiver Grundlage einen Potentialmeßbereich vorzusehen, der durch kapazitive Erfassung eines sich in Meßrichtung ändernden Wechselspannungs-Verteilungsmusters einen Spannungsamplitudenverlauf als Funktion der Potentialsondenstellung erfaßt und mit der Potentialmeßsonde mindestens elektrisch, bevorzugt gleichzeitig mechanisch einen Potentialkoppelbereich zu verbinden, durch welchen, ebenfalls auf kapazitiver Grundlage der erfaßte Spannungsamplituden-Meßwert insgesamt berührungslos, jedoch ohne Änderung der beteiligten kapazitiven Elemente, einer Auswertung zugeführt wird. Hierdurch ist es möglich, den Verschiebeweg bei linearer Bewegung, den Winkel bei einer Drehbewegung bzw. auch die jeweils eingenommene Position eines bewegbaren Körpers sehr genau zu bestimmen.

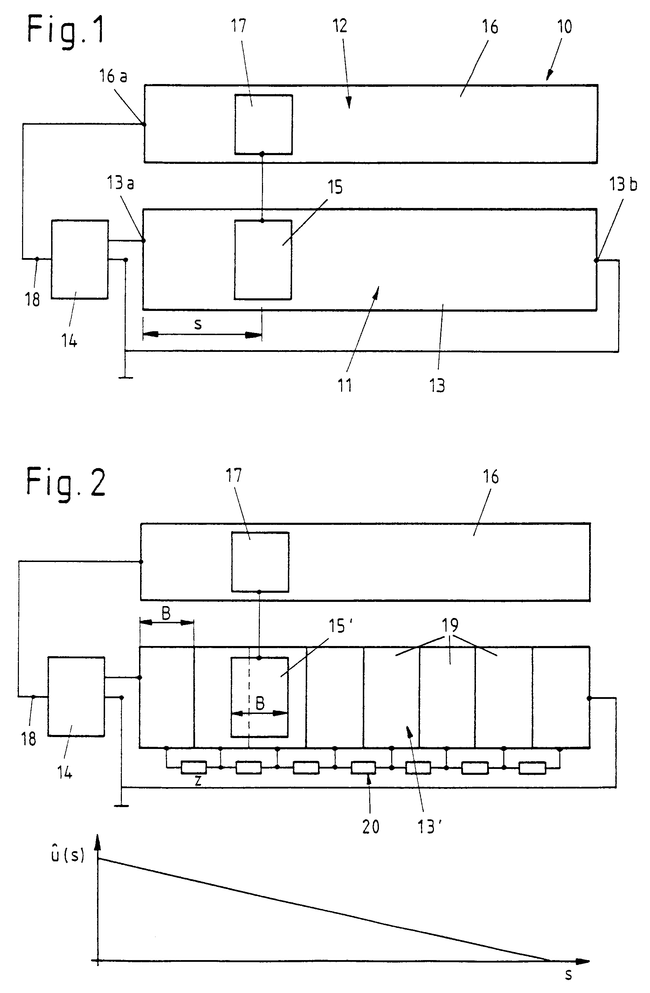

Die in Fig. 1 gezeigte erste Ausführungsform eines Positionssensors 10 umfaßt einen Potentialmeßbereich 11 und einen Potentialkoppelbereich 12, wobei bei diesem Ausführungsbeispiel der Potentialmeßbereich ein echtes Spannungsteilerelement 13 mit stetigem Spannungsverlauf ist, beispielsweise also eine Widerstandsbahn, wie sie üblicherweise bei Meßwertgebern auf potentiometrischer Grundlage (gleichstromgespeist) oder bei Drehpotentiometern üblich sind.

Den beiden Endanschlüssen 13a, 13b der Widerstandsbahn des Spannungsteilers wird dabei von einer im einzelnen nicht zu erläuternden Speise- und, falls gewünscht, gleichzeitig Auswerteschaltung 14 eine Speisewechselspannung vorgegebener konstanter oder auch steuerbarer Amplitude zugeführt, wobei einer der Anschlüsse, beispielsweise 13b mit Masse verbunden ist.

Der Widerstandsbahn des Spannungsteils ist berührungslos, also im vorgegebenen Abstand eine Potentialmeßsonde 15 zugeordnet, die auf diese Weise mit der Widerstandsbahn in einer kapazitiven Wirkverbindung steht und daher auch in der Lage ist, das sich über dem Weg s (in Meßrichtung) ändernde Wechselspannungspotential über die Widerstandsbahn abzugreifen, wobei die in diesem Fall rechteckplattenförmige Potentialmeßsonde 15 integrierend bzw. mittelwertbildend wirkt und immer eine solche Wechselspannungsamplitude abgreift, wie sich diese als Mittelwert aus der Position der Potentialmeßsonde ergibt.

Die Höhe der Platte der Potentialmeßsonde sollte in etwa gleich der Breite der insofern stationären Widerstandsbahn entsprechen, wobei die Widerstandsbahn auf einem geeigneten Trägersubstrat angeordnet sein kann, und zwar parallel (oder auf der anderen Seite) zum Verlauf einer (ebenfalls rechteckförmigen) Elektrodenfläche 16 des Potentialkoppelbereichs 12. Es versteht sich, daß der Potentialmeßbereich 11 und der Potentialkoppelbereich 12 voneinander elektrisch isoliert sind, was in geeigneter Weise geschehen kann und nicht weiter erläutert zu werden braucht. Eine elektrische Isolation ist beispielsweise schon dann gegeben, wenn sich die beiden Bereiche 11 und 12 auf gegenüberliegenden Seiten eines isolierenden Trägersubstrats befinden oder, bei paralleler Anordnung, auf der gleichen Seite, die Beschichtung des Trägersubstrats, sofern eine solche vorgesehen ist und die beispielsweise aus Leitsilber gebildet sein kann, durchgehend zwischen den beiden Bereichen unterbrochen ist.

Wie der Potentialmeßbereich 11 verfügt auch der Potentialkoppelbereich 12 über einen beweglichen Sondenteil, nämlich die Potentialkoppelsonde 17, die sich ebenfalls in einem vorgegebenen Abstand, also berührungsfrei über der durchweg elektrisch leitenden Elektrodenfläche 16 des Potentialkoppelbereichs 12 synchron zur Potentialmeßsonde verschiebt.

Die bei dem dargestellten Ausführungsbeispiel jeweils rechteckförmigen Flächen von Potentialmeßsonde und Potentialkoppelsonde sind mindestens elektrisch miteinander verbunden - bevorzugt bilden sie ein gemeinsames, elektrisch leitendes und mit den zugeordneten Bahnen in kapazitiver Wirkverbindung stehendes gemeinsames Bauteil, beispielsweise eine Doppelkupferplattenanordnung, die von einer geeigneten, in den Ausführungsformen nicht dargestellten Lagerung gemeinsam über den zugeordneten Flächen von Widerstandsbahn bzw. Elektrodenfläche in Meßrichtung verschoben wird.

Erkennbar bilden so die jeweiligen Flächen von Potentialmeßsonde 15 und Potentialkoppelsonde 17 mit den jeweiligen Gegenflächen der Widerstandsbahn bzw. der Elektrodenfläche 16 einen Kondensator (Meßkondensator bzw. Koppelkondensator), deren Kapazität über dem Verschiebeweg s unverändert bleibt, so daß Kapazitätsänderungen in die Meßwertbildung nicht einfließen.

Dabei erstreckt sich die Elektrodenfläche 16 des Potentialkoppelbereichs 12 deshalb über die Länge des Verschiebewegs s parallel zur Spannungsteilereinrichtung, damit die beiden sich mit dem Meßweg bewegenden Kondensatorteile, nämlich die Potentialmeßsonde 15 und die Potentialkoppelsonde 17 gemeinsam und synchron miteinander bewegen können und bevorzugt ein gemeinsames, einstückiges Bauteil bilden können bei dann entsprechend gemeinsamer mechanischer Lagerung.

Auf diese Weise überträgt die Potentialkoppelsonde 17 das von der Potentialmeßsonde 15 abgegriffene und insofern auch an ihr selbst anliegende Wechselspannungsamplitudenmeßsignal kapazitiv getreu auf die Elektrodenfläche 16 des Potentialkoppelbereichs 12, die lediglich einen einzigen Anschluß 16a benötigt, von welchem das so abgegriffene Spannungsamplitudensignal auf den Eingang 18 der Speise-/Auswerteschaltung 14 gelangt. Hierbei versteht es sich, daß durch entsprechende Entfernung oder Abschirmung eine elektrische Kopplung zwischen dem Spannungsteilerelement 13 und der Elektrodenfläche 16 des Potentialkoppelbereichs 12 ausgeschlossen ist.

Das Träger- und gleichzeitig Isoliersubstrat kann eine Epoxy- oder Keramik-Leiterplatte mit kleinem Ausdehnungskoeffizienten sein und ist an Masse angeschlossen. Letztlich ist es auch möglich, eine Abhängigkeit eines solchen Positionssensors von der Umgebungstemperatur noch dadurch zu berücksichtigen, daß das Trägersubstrat mit einem Temperaturfühler versehen ist, dessen Signal ebenfalls der Auswerteschaltung 14 zugeführt wird.

Die Wirkungsweise eines solchen Positionssensors ist dann erkennbar so, daß die an der Widerstandsbahn 13 angelegte Wechselspannung (oder eines entsprechenden Wechselspannungsfrequenzgemisches) als linear ansteigendes bzw. abfallendes Signal, wie weiter unten in Fig. 2 gezeigt, von der Potentialmeßsonde 15 abgegriffen, auf die Potentialkoppelsonde übertragen und von dieser kapazitiv auf die Elektrodenfläche 16 gekoppelt wird, so daß das kapazitiv abgegriffene Signal ohne jede Verfälschung und sonstige Störeinflüsse zur Auswerteschaltung 14 gelangt. Dabei versteht es sich, daß die Elektrodenfläche 16 das Signal widerstandsfrei überträgt, beispielsweise also von einer geeigneten Kupferkaschierung auf dem Trägersubstrat gebildet sein kann oder aus einem Leitsilberauftrag entsprechender Größe und Form besteht.

Dabei ergibt sich das von der Potentialmeßsonde 15 abgegriffene Potential aus der Summe der Teilspannungen an der von der Potentialmeßsonde jeweils eingenommenen Position (Meßweg s). Die eine Teilspannung wird von der Eingangsspannung am Anfang der stationären Widerstandsbahn erzeugt und ist proportional zur Differenz zwischen der Meßposition s und der Länge der Widerstandsbahn. Die andere Teilspannung wird von der (gegenphasigen) Eingangsspannung am Ende der Widerstandsbahn erzeugt und ist proportional zur Position s.

Selbst kleinste Verschiebungen der Platte der Potentialmeßsonde gehen dabei in die abgegriffene Wechselspannungsamplitude ein, da sich das Verhältnis der Teilspannungen bei einer Verschiebung um $\delta s$ natürlich ändert. Die Aufnahme des Meßsignals erfolgt berührungsfrei, desgleichen seine Übertragung an die stationäre Elektrodenfläche 16, so daß ein solcher Positionssensor keinem mechanischen Verschleiß ausgesetzt ist und keine variablen Störgrößen wie beispielsweise variable Streukapazitäten auftreten, die schon durch Biegung von Verbindungsleitungen bzw. Übergangswiderstände bei Schleifkontakten erzeugt werden können.

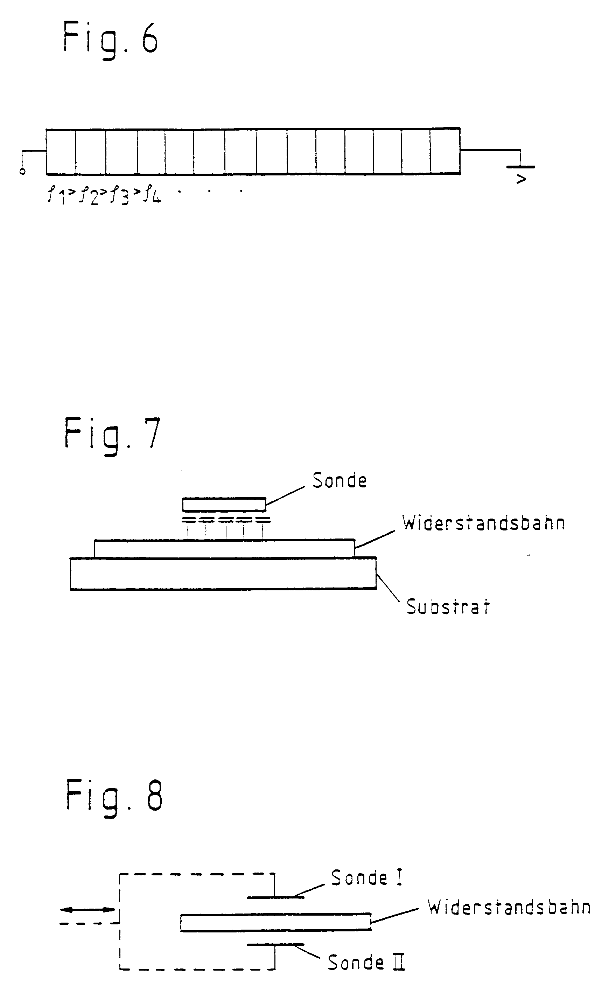

Die bisherigen Erläuterungen lassen sich durch die folgenden, mit Bezug auf die Darstellungen der Fig. 6 und 7 durchgeführten Betrachtungen noch genauer präzisieren:

Auf der "Potentiometer"-Widerstandsbahn entsprechend Fig. 6 stellt sich bei Wechselstromspeisung eine Potentialverteilung nach folgender Formel ein:

$$\text{Potential } \phi = -\vec{E} \cdot \vec{x}$$

oder als elektrische Feldverteilung ausgedrückt

$$\text{Feld: } \vec{E} = -\text{grad}\phi$$

Dabei ist jeweils, wie auch Fig. 6 zeigt,

$$\phi 1 > \phi 2 > \phi 3 > \phi 4 > ....$$

Da es sich um eine Wechselspannung handelt, kann das Potential folgendermaßen dargestellt werden:

$$\phi = \phi o \cdot \text{sign}[\sin(\omega \cdot t)]$$

mit

$\phi o$ = Amplitude des Potentials
$\omega$ = Kreisfrequenz $2\pi\nu$
$\nu$ = Frequenz
$t$ = Zeit

Das gesamte System läßt sich als Kondensator auffassen, welches aus lauter kleinen Kondensatoren zusammengesetzt ist, wie die Darstellung der Fig. 7 im einzelnen angibt.

Die Kondensatorgleichung lautet:

$$C = \varepsilon r \cdot \varepsilon o \cdot A/\alpha$$

mit

C: Kapazität
$\varepsilon r$: relative Dielektrizitätskonstante
A: Fläche des Kondensators
d: Abstand (der Platten)

Die Kapazität ergibt sich aus

$$C = \sum_{i=1}^{n} Ci = \varepsilon o \cdot \varepsilon r \cdot \sum_{i=1}^{n} \cdot \frac{Ai}{di}$$

$$\text{Für die Kapazitäten soll gelten:} \quad \begin{aligned} \Delta C1 &\overset{!}{=} \Delta Cn \\ \Delta C2 &\overset{!}{=} \Delta Cn\text{-}1 \\ \Delta C3 &\overset{!}{=} \Delta Cn\text{-}2 \end{aligned}$$

$$\begin{array}{cc} \cdot & \cdot \\ \cdot & \cdot \\ \cdot & \cdot \\ \cdot & \cdot \end{array}$$

Das abgegriffene Potential hängt in linearer Beziehung vom Ort x ab. $\rightarrow \phi = \phi(x)$. Über die Teilkapazitäten $\Delta Ci$ fließen Verschiebungsströme $I_i$ in die Sonde, dabei gilt:

$$I_i = \Delta Ci \cdot \frac{d\phi i(x)}{dt}$$

Für den gesamten Verschiebestrom I gilt dann:

$$I = \sum_{i=1}^{n} \Delta Ci \cdot \frac{d\phi i(x)}{dt} \, ,$$

d.h. die einzelnen Spannungsamplituden werden aufaddiert zu einem gesamten Verschiebungsstrom I.

Das Ausführungsbeispiel der Fig. 2 ähnelt dem Ausführungsbeispiel der Fig. 1 bis auf den Umstand, daß das Spannungsteilerelement 13' in diesem Falle nicht die Form einer Widerstandsbahn aufweist, sondern einzelne, aneinander gereihte, jedoch gegeneinander isolierte Elektrodenplatten 19 aufweist, die eine vorgegebene Ausdehnung B in Meßrichtung jeweils aufweisen und über einen "Widerstands"-Spannungsteiler 20 mit Teilspannungen der anliegenden Versorgungsspannung versorgt werden. Die Spannungteilung kann durch beliebige Impedanzen z wie Widerstände, Induktivitäten oder Kapazitäten bewirkt werden, die in Reihe geschaltet und deren Verbindungspunkte jeweils mit den einzelnen Elektrodenplatten 19 verbunden sind. In diesem Fall empfiehlt es sich, jedenfalls die Ausdehnung der Fläche der Potentialmeßsonde 15' gleich oder mindestens gleichzumachen der Breitenausdehnung B der einzelnen Elektrodenplatten, denn eine Bewegung der Platte der Potentialmeßsonde längs einer gegebenen Elektrodenplatte 19 würde dann nicht feststellbar sein, wenn die Breite der Potentialmeßsonde kleiner als die Breite einer der Elektrodenplatten ist.

Durch eine solche Beschaltung der einzelnen Elektrodenplatten 19 ergibt sich zwar an diesem und über die gesamte Abfolge der Elektrodenplatten gesehen ein stufenförmiger Spannungsverlauf; trotz dieses stufenförmigen Spannungsverlaufs der anliegenden Wechselspannung ist jedoch die von der Platte der Potentialmeßsonde 15' abgegriffene Spannung aufgrund der integrierenden Wirkung der kapazitiven Kopplung bei Vernachlässigung von Randeffekten linear und entspricht wiederum dem in Fig. 2 unten gezeigten Spannungsverlauf über der Meßwegstrecke s.

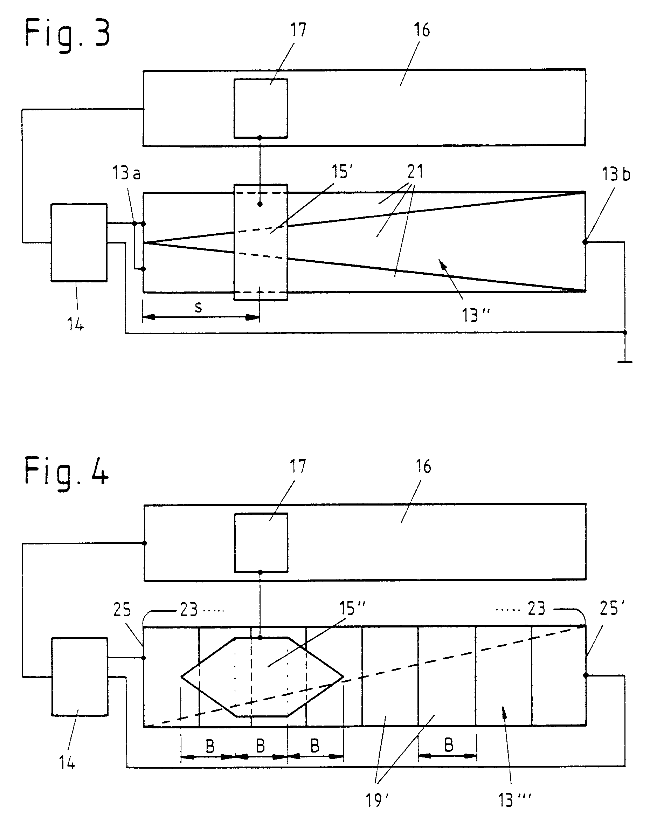

Eine weitere Ausführungsform der Erfindung bei sonst identischer Ausbildung im Grundsätzlichen betrifft wiederum die Beschaltung der Spannungsteilereinrichtung entsprechend Fig. 3, die in diesem Fall aus beispielsweise zwei, wie dargestellt jedoch bevorzugt aus drei quer zur Meßrichtung angeordneten und sich in Meßrichtung jeweils verjüngenden oder verbreiternden Meßelektrodenflächen 21 besteht.

In diesem Fall können die beiden äußeren, in der Zeichenebene der Fig. 3 nach rechts spitzwinklig verlaufenden Meßelektrodenflächen mit dem einen Anschluß 13a der Speise-/Auswerteschaltung 14 verbunden sein, während die mittlere Meßelektrodenfläche mit dem anderen Anschluß 13b verbunden ist, der gleichzeitig an Masse liegt. Die Spannungsteilereigenschaften oder besser die Spannungsverteilereigenschaften eines solchen Spannungs(ver)teilerelements 13' ergeben sich aus der kombinierten Gesamtwirkung der über die gesamte Länge der einzelnen Streifen der Meßelektrodenflächen zwar konstant anliegenden Spannung, die jedoch durch die integrierende Wirkung der alle Flächen in Querrichtung jeweils gleichzeitig überdeckenden Platte der Potentialmeßsonde 15' jeweils nur ihrem jeweiligen relativ überdeckten Flächenanteil entsprechend zur Wirkung kommen. Auch hier ergibt sich daher genau der gleiche linear verlaufende abgetastete Spannungsverlauf höchster Auflösung wie in Fig. 2 unten dargestellt, mit dem weiteren Vorteil, daß der Einfluß von Randeffekten minimiert wird, wobei es sinnvoll ist, in Querrichtung die Abmessung der Platte der Potentialmeßsonde 15' so zu gestalten, daß diese die Meßelektrodenflächen überragt.

Die Fig. 4 stellt eine Kombination der Gestaltung des Spannungsteilerelements aus den beiden in den Figuren 2 und 3 gezeigten Varianten dar, wobei die Trägerplatte von einem doppelseitig beschichteten Dielektrikum gebildet sein kann, auf deren einen, der Potentialmeßsonde 15" zugewandten Seite wie in Fig. 2 gezeigt in Meßrichtung hintereinander angeordnete Elektrodenplatten 19' der Breite B angeordnet sind, während auf der gegenüberliegenden Seite des Dielektrikums in diesem Fall lediglich zwei sich in Meßrichtung jeweils entgegengesetzt zueinander verjüngende bzw. sich verbreiternde Meßelektrodenflächen 25, 25' angeordnet sind, die jeweils mit den entgegengesetzten Anschlüssen der Speise-/Auswerteschaltung 14 verbunden sind. Ein entsprechender Anschluß ist in Fig. 4 auch genau wie in Fig. 2 gezeigt, bezüglich der Elektrodenplatten 19' getroffen, jedoch in Fig. 4 aus Gründen der Klarheit nicht mehr dargestellt.

Ergänzend hierzu lassen sich die Linearitätsbedingungen sowie die Störungsfreiheit noch weiter dadurch verbessern, daß, wie ebenfalls in Fig. 4 gezeigt, die Platte der Potentialmeßsonde 15" aus einem inneren rechteckförmigen Teil der Ausdehnung B in Meßrichtung entsprechend den rechteckförmigen Elektrodenplatten 19' besteht und aus zwei weiteren bevorzugt dreieckigen Teilen, die an die beiden Seiten angesetzt sind und zulaufend ebenfalls eine Breite B noch einnehmen. Hierdurch lassen sich die Sprungstellen an den Kanten vermindern, abgestimmt auf die Geometrie der Platten.

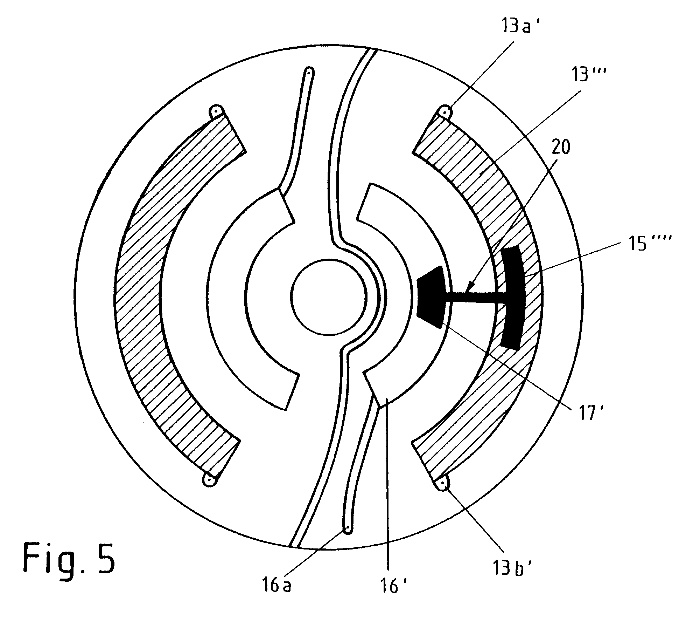

In Fig. 5 ist schließlich ein im Grundprinzip wie die Ausführungsformen der Figuren 1 bis 4 arbeitender Positionssensor dargestellt, der nach Art eines Drehpotentiometers aufgebaut ist und ein Doppelsystem umfaßt, so daß lediglich auf eines der Ausführungsformen genauer eingegangen zu werden braucht. Es ist eine äußere Widerstandspiste oder Widerstandsbahn 13'" dargestellt, mit kreisringförmigem Verlauf und Wechselstromanschlüssen 13a', 13b' an den jeweiligen Enden, wobei, einem konzentrischen Innenkreissegment folgend, die Koppelelektrodenfläche 16' mit lediglich einem Außenanschluß 16a versehen ist.

Die beiden stationären Flächen des Potentialmeß- und Potentialkoppelbereichs 11, 12 werden von einem gemeinsamen Bauteil 20 aus Potentialmeßsonde und Potentialkoppelsonde, welches drehbeweglich gelagert ist, überstrichen, wobei das Bauteil beispielsweise einstückig aus einer entsprechend der in Fig. 5 dargestellten Formgestaltung gestanzten Kupferplatte bestehen kann, deren Potentialkoppelsondenteil 17' das abgegriffene Potential auf die Koppelelektrodenfläche 16' überträgt.

Bei hohen Linearitätsanforderungen kann ein Linearitätsabgleich bei allen dargestellten Ausführungsformen notwendig werden. Beispielsweise ist bei Widerstandselementen in bekannter Weise ein Abgleich durch Änderung der Breite der Widerstandsbahn möglich, während bei den Ausführungsformen der Figuren 2, 3 und 4 der Linearitätsabgleich durch Abgleich der Spannungsteilerwiderstände bzw. durch Korrektur der Breite der sich verjüngenden bzw. verbreiternden Leiterbahnen möglich ist.

Bezüglich der Ausführungsformen der Fig. 4 ist noch erwähnenswert, daß die Kontur der Leiterbahnen auf der Rückseite, also der Meßelektrodenflächen 25, 25' an sich beliebig sein kann, wobei lediglich sichergestellt sein sollte, daß die Kapazität zwischen den Kondensatorflächen der Vorderseite und den rückseitigen Teilflächen in einem vorgegebenen Teilerverhältnis steht. Dies läßt sich durch Abgleich der Teilflächen hinter den einzelnen Elektrodenplatten 19 auf der Vorderseite vornehmen.

Schließlich wird darauf hingewiesen, daß das in Fig. 8 stark schematisiert dargestellte Ausführungsbeispiel eines beidseitigen Abgriffs, bei dem sich also zwei Potentialmeßsonden, eine erste Sonde I und eine zweite Sonde II auf gegenüberliegenden Seiten einer Widerstandsbahn befinden, besonders geeignet ist, um hierdurch den Einfluß von Abstandsvariationen zu reduzieren und gleichzeitig den Einfluß einer lokalen oder globalen Änderung der relativen Dielektrizitätskonstanten zu minimieren. Erkennbar wird nämlich bei einer Veränderung des Abstands einer der Sonden zur von ihr abgetasteten Widerstandsbahn, beispielsweise im Sinne einer Vergrößerung des Abstands, notwendigerweise zu einer gleichzeitigen Verringerung des Abstands der anderen Sonde zur Widerstandsbahn führt, so daß sich diese beiden Einflüsse in etwa gegenseitig aufheben.

Als Auswerteschaltungen können die üblichen Wegaufnehmern zugeordneten und für sich gesehen bekannten Auswerteschaltungen verwendet werden, bei denen das am Wegaufnehmer abgegriffene Signal in geeigneter Weise verstärkt aufgearbeitet und angezeigt wird. Insbesondere eignen sich aber Auswerteschaltungen, bei denen zur Vermeidung von Störeinflüssen, die durch an dem Ausgang des Wegaufnehmers bzw. am Eingang der Auswerteschaltung befindliche Ableitwiderstände und Streukapazitäten stehen, das am Wegaufnehmer abgegriffene Signal durch geeignete Mittel auf einem Potentialpegel des Wertes Null eingestellt wird, nämlich durch entsprechende Beeinflussung der Speisespannung des Potentialmeßbereichs.

Abschließend wird darauf hingewiesen, daß die Ansprüche und insbesondere der Hauptanspruch Formulierungsversuche der Erfindung ohne umfassende Kenntnis des Stands der Technik und daher ohne einschränkende Präjudiz sind. Daher bleibt es vorbehalten, alle in der Beschreibung, den Ansprüchen und der Zeichnung dargestellten Merkmale sowohl einzeln für sich als auch in beliebiger Kombination miteinander als erfindungswesentlich anzusehen und in den Ansprüchen niederzulegen sowie den Hauptanspruch in seinem Merkmalsgehalt zu reduzieren.

## Patentansprüche

1. Verfahren zur Bestimmung einer jeweiligen örtlichen Position, des Verschiebewegs oder des Winkels eines bewegbaren Körpers, wobei eine Sonde längs einer vorgegebenen Potentialverteilung geführt und der von der Sonde erfaßte Meßwert ausgewertet wird, dadurch gekennzeichnet, daß

EP 0 711 977 A2

a) ein mindestens in einer Richtung räumlich ausgedehntes Spannungs(ver)teiler-Element mit einer Wechselspannung gespeist wird, derart, daß sich in mindestens einer Richtung auf dem Spannungs(ver)teiler-Element ein Wechselspannungs-Amplitudenverteilungsmuster mit unterschiedlichen Wechselspannungsamplituden in der mindestens einen Richtung ergibt, daß

b) längs der mindestens einen Richtung eine Potentialmeßsonde entsprechend dem zu erfassenden Weg (s), des Winkels oder der Position geführt und in einem solchen berührungsfreien Abstand zum Spannungs(ver)teiler-Element gehalten wird, daß die Potentialmeßsonde je nach der von ihr eingenommenen Position unterschiedliche Wechselspannungsamplituden des Wechselspannungsamplitudenverteilungsmusters durch kapazitive

Einkopplung erfaßt, wobei die Kapazitätsbeziehungen über der Potentialsonden-Verschiebung im wesentlichen konstant gehalten werden, daß

c) die Potentialmeßsonde mit einer Potentialkoppelsonde verbunden ist, die kapazitiv auf eine Koppelelektrode arbeitet, von welcher

d) der von der Potentialmeßsonde erfaßte Wechselspannungsamplitudenmeßwert, der in Meßrichtung unabhängig ist von der jeweiligen Relativposition zwischen Koppelsonde und Koppelelektrode, zur Auswertung übertragen wird.

2. Kontaktloser Positionssensor auf kapazitiver Grundlage zur Bestimmung einer jeweiligen örtlichen Position, des Verschiebewegs oder des Winkels eines bewegbaren Körpers, wobei eine Sonde längs einer vorgegebenen Potentialverteilung geführt und der von der Sonde erfaßte Meßwert ausgewertet wird, dadurch gekennzeichnet, daß ein flächiges Spannungs(ver)teiler-Element (13, 13', 13'', 13''') mit mindestens einer Haupterstreckungsrichtung in Meßrichtung vorgesehen ist, dem eine Wechselspeisespannung zugeführt ist,
daß längs des Spannungs(ver)teiler-Elements und berührungsfrei zu diesem in sich mit der Meßbewegung nicht änderndem Abstand eine Potentialmeßsonde (15, 15', 15'') geführt ist,
daß die Potentialmeßsonde mindestens elektrisch mit einer Potentialkoppelsonde verbunden ist und gemeinsam und synchron mit dieser die Meßbewegung durchführt, wobei
die Potentialkoppelsonde mit einer stationären Koppelelektrodenfläche (16) in kapazitiver Wirkverbindung steht, an welcher die von der Potentialmeßsonde (15, 15', 15'') erfaßte, sich linear mit dem Meßwert ändernde Wechselspannungsamplitude zur Auswertung anfällt.

3. Positionssensor nach Anspruch 2, dadurch gekennzeichnet, daß Potentialmeßsonde (15, 15', 15'') und Potentialkoppelsonde (17) ein einstückiges, elektrisch leitendes, jedenfalls im Bereich ihrer Gegenflächen (Koppelelektrodenfläche 16; Spannungsteilerelement 13, 13', 13'', 13''') jeweils eine flächige Ausdehnung aufweisendes Bauelement darstellen, welches zur Durchführung der Meßbewegung eine einheitliche Lagerung aufweist, die so ausgebildet ist, daß sich die Kapazitätsverhältnisse im Potentialmeßsonden- und Potentialkoppelsonden-Bereich zu den jeweiligen Gegenflächen (Koppelelektrodenfläche; Spannungsteilerelement) im wesentlichen veränderungsfrei verhalten.

4. Positionssensor nach Anspruch 2 oder 3, dadurch gekennzeichnet, daß die Potentialmeßsonde mit ihrem jeweils zugeordneten Spannungsteilerelement und die Potentialkoppelsonde mit ihrer jeweils zugeordneten Koppelelektrodenfläche jeweils durch die Meßbewegung nicht veränderbare, in Reihe geschaltete Meß- und Koppelkondensatoren bilden.

5. Positionssensor nach Anspruch 4, dadurch gekennzeichnet, daß die beweglichen Teile (Potentialmeßsonde 15, 15', 15''; Potentialkoppelsonde 17) von Meß- bzw. Koppelkondensator parallel und gemeinsam in Meßrichtung antreibbar sind, während deren jeweilige Kondensatorgegenflächen (Spannungs(ver)teiler-Element 13, 13', 13'', 13'''; Koppelelektrodenfläche 16) auf einem Trägersubstrat stationär gelagert sind.

6. Positionssensor nach einem der Ansprüche 2 bis 5, dadurch gekennzeichnet, daß Potentialmeßsonde (13, 13', 13'', 13''') und Potentialkoppelsonde (17) mechanisch und elektrisch miteinander gekoppelt sind.

7. Positionssensor nach einem der Ansprüche 2 bis 6, dadurch gekennzeichnet, daß der die Potentialmeßsonde und das zugeordnete Spannungs(ver)teiler-Element umfassende Potentialmeßbereich (11) und der die Potentialkoppelsonde (17) mit zugeordneter Koppelelektrodenfläche (16) umfassende Potentialkoppelbereich (12) auf der gleichen oder auf gegenüberliegenden Flächen eines isolierenden Trägersubstrats angeordnet sind.

8. Positionssensor nach einem der Ansprüche 2 bis 7, dadurch gekennzeichnet, daß das Spannungs(ver)teiler-Element (13) ein Spannungsteiler in Form einer Potentiometerwiderstandsbahn (13) ist.

9. Positionssensor nach einem der Ansprüche 2 bis 7, dadurch gekennzeichnet, daß das Spannungs(ver)teiler-Element aus in Meßrichtung hintereinander angeordneten, zueinander isolierten Elektrodenplatten (19, 19') besteht, die jeweils mit den Verbindungsanschlüssen einer Kettenwiderstandsspannungsteilerschaltung (20) verbunden sind derart, daß sich insgesamt ein Spannungsteiler mit stufenförmigem Spannungsverlauf ergibt.

10. Positionssensor nach einem der Ansprüche 2 bis 7, dadurch gekennzeichnet, daß das Spannungs(ver)teiler-Element (13") aus mindestens zwei, vorzugsweise drei, quer zur Meßrichtung angeordneten und sich in Meßrichtung jeweils verjüngenden bzw. verbreiternden Meßelektrodenflächen (21) besteht, wobei aneinandergrenzende Meßelektroden-Flächen in derselben Meßrichtung jeweils eine zueinander entgegengesetzte Verjüngungs- bzw. Verbreiterungscharakterisik aufweisen.

11. Positionssensor nach einem der Ansprüche 2 bis 10, dadurch gekennzeichnet, daß das Spannungs(ver)teiler-Element (13"") ein doppelseitig beschichtetes Dielektrikum umfaßt, auf dessen einer, der Potentialmeßsonde (15") zugewandten Seite in Meßrichtung hintereinander angeordnete Elektrodenplatten (19') vorgesehen sind, während auf der gegenüberliegenden Seite zwei sich in Meßrichtung jeweils zueinander verjüngende bzw. verbreiternde Meßelektrodenflächen (25, 25') gebildet sind.

12. Positionssensor nach Anspruch 9, dadurch gekennzeichnet, daß die Ausdehnung der Platte der Potentialmeßsonde (15') in Meßrichtung der Breite (B) jeder Elektrodenplatte (19) in Meßrichtung entspricht.

13. Positionssensor nach einem oder mehreren der Ansprüche 2 bis 12, dadurch gekennzeichnet, daß die Platte der Potentialmeßsonde auf seinem rechteckigen Teil mit einer Ausdehnung (B) in Meßrichtung der Breite jeder Elektrodenplatte (19) entspricht und aus zwei dreieckigen Teilen zusammensetzt, die sich beidseitig in Meßrichtung erstrecken.

14. Positionssensor nach einem oder mehreren der Ansprüche 2 bis 13, dadurch gekennzeichnet, daß auf einem gemeinsamen kreisförmigen Trägersubstrat mindestens ein aus einem Potentialmeßbereich (11) und einem Potentialkoppelbereich (12) bestehendes Meßsystem vorgesehen ist, mit einem eine Widerstandsbahn umfassenden Spannungsteilerelement (13''') in Form eines Kreisteilsegmentes und einer konzentrisch zu dieser verlaufenden inneren Koppelelektrodenfläche (16'), die ebenfalls einem Kreisteilsegment folgt, sowie mit einem gemeinsamen elektrisch leitfähigen Bauteil (Stanzteil), welches aus den beiden plattenförmigen Gegenkondensatorflächen der Potentialmeßsonde (15"") und der Potentialkoppelsonde (17') besteht, die durch einen einstückigen Zwischensteg mechanisch und elektrisch verbunden und von einer gemeinsamen Lagerung längs der vorgegebenen Teilkreisbewegung des Meßwegs geführt sind.

15. Positionssensor nach einem oder mehreren der Ansprüche 2 bis 14, dadurch gekennzeichnet, daß ein gemeinsames Spannungs(ver)teiler-Element (Widerstandsbahn) zur Reduzierung des Einflusses einer Abstandsvariation gleichzeitig von beiden Seiten im Sinne eines beidseitigen Abgriffs abgetastet wird.

# Fig.1

# Fig.2

EP 0 711 977 A2

Fig. 3

Fig. 4

Fig. 5

# Fig. 6

$f_1 > f_2 > f_3 > f_4$ · · ·

# Fig. 7

Sonde

Widerstandsbahn

Substrat

# Fig. 8

Sonde I

Widerstandsbahn

Sonde II